# EUROPÄISCHE PATENTSCHRIFT

(11) **EP 3 087 261 B1**
(45) Veröffentlichungstag und Bekanntmachung des Hinweises auf die Patenterteilung: **18.04.2018**
(21) Anmeldenummer: 14771861.3
(22) Anmeldetag: 19.09.2014
(51) Int. Cl.: F01N 3/22, F01N 3/30, F02B 37/18, F02M 26/00

(54) **VENTILE FÜR VERBRENNUNGSKRAFTMASCHINEN**
VALVE IN INTERNAL COMBUSTION ENGINES
SOUPAPE DE MOTEURS À COMBUSTION INTERNE

(30) Priorität: 24.10.2013 DE 102013111722
(43) Veröffentlichungstag der Anmeldung: 02.11.2016
(73) Patentinhaber: Pierburg GmbH, 41460 Neuss (DE)
(72) Erfinder: BERTHOLD, Herrmann, 41462 Neuss (DE); OZDYK, Björn Jonas, 40229 Düsseldorf (DE); PAFFRATH, Holger, 50259 Pulheim (DE); CELIK, Halim, 50354 Hürth (DE); BOUTROS-MIKHAIL, Matthias, 41460 Neuss (DE); SASSENRATH, Kai, 50733 Köln (DE)
(74) Vertreter: Patentanwälte ter Smitten Eberlein-Van Hoof Rütten Partnerschaftsgesellschaft mbB
(86) Internationale Anmeldenummer: PCT/EP2014/070008
(87) Internationale Veröffentlichungsnummer: WO 2015/058914

(56) Entgegenhaltungen:
- EP-A1- 1 361 383
- EP-A2- 1 628 313
- WO-A1-91/10854
- DE-B3-102008 004 531
- DE-C1- 3 709 474

## Beschreibung

Die Erfindung betrifft ein Ventil für Verbrennungskraftmaschinen mit einem Aktor mit einer elektrischen Antriebseinheit, einem Gehäuse, in dessen Innenraum die Antriebseinheit angeordnet ist, mindestens einer Lüftungsöffnung im Gehäuse und einem Stecker, über den die Antriebseinheit elektrisch mit einer Spannungsquelle verbindbar ist.

Derartige Aktoren dienen beispielsweise zur Betätigung von Abgasrückführventilen zur Regelung der in den Verbrennungsraum zurückgeführten Abgasmenge oder von Sekundärluftventilen zur Regelung der in den Abgasstrang eingebrachten Sekundärluftmenge, die zur Schadstoffminderung in Verbrennungsmotoren eingesetzt werden. Diese Aktoren werden häufig elektromagnetisch betätigt, können jedoch auch elektromotorisch betätigt werden.

Ein elektromagnetisch betätigbares Sekundärluftventil wird beispielsweise in der DE 10 2009 058 930 A1 beschrieben. Dieses Ventil regelt mittels eines Hubventils, dessen Ventilstange mit dem Anker des Elektromagneten verbunden ist, eine dem Abgasrohr zuzuführende und von einer Sekundärluftpumpe geförderte Luftmenge, indem ein Durchströmungsquerschnitt zwischen einem Fluideinlasskanal und einem Fluidauslasskanal, der mit dem Abgasrohr verbunden ist, durch Betätigung des Elektromagneten eingestellt wird. Um ein Rückströmen der Luft bei auftretenden Abgaspulsationen zu vermeiden, weist das Ventil eine Rückschlagklappe auf, die bei geschlossenem Ventil gegen den Ventilsitz gedrückt wird. Auftretende Pulsationen der Luft wirken jedoch auch auf das Innere des Aktors. Auch entstehen im Ankerraum durch die Bewegung des Ankers Druckunterschiede.

Bei Abgasrückführventilen wirken die auftretenden Abgaspulsationen direkt auf das Innere des Aktors, so dass Fehlfunktionen zu befürchten sind.

Um eine Belüftung des Ankerraums sicher zu stellen und gleichzeitig ein Eindringen von Schmutz, insbesondere von Spritzwasser von außen ins Innere des Elektromagneten zu verhindern, wird in der DE 10 2008 004 531 B3 vorgeschlagen den Ankerraum über eine Entlüftungsbohrung mit dem Außenraum des Ventils zu verbinden. Auf der Bohrung sitzt ein Schirmpilzventil mit einem elastischen Rand, der sich auf die Entlüftungsbohrung setzt und diese verschließt, wenn der Druck im Ankerraum geringer ist als im Außenraum. Bei Umkehr der Druckdifferenz öffnet das Ventil. Dies bedeutet jedoch, dass eine Belüftung bei auftretendem Vakuum im Ankerraum nicht möglich ist. Des Weiteren entstehen Öffnungs- und Schließgeräusche durch die Bewegung des Schirmpilzventils.

Des Weiteren ist aus der WO 91/10854 A1 ein Elektromagnetventil bekannt, dessen Anker in einem mit Öl gefüllten Raum bewegt wird und welches in einem Öl gefüllten Raum montiert wird. Dieser Raum ist über mehrere Kanäle mit einer Öffnung verbunden, welche an der zum Anker entgegengesetzten Seite der Spule des Ventils an einem Einlegeteil ausgebildet ist und in einem geodätisch oberen Bereich des Ventils angeordnet ist. Die Öffnung führt in einen Raum, der nach außen durch das Ventilgehäuse begrenzt wird, in dem im geodätisch unteren Bereich eine weitere Öffnung ausgebildet ist. Um nun zu verhindern, dass das im Außenraum befindliche Öl in das Ventil eindringt, ist in dem durch das Einlegeteil und das Ventilgehäuse begrenzten Raum ein Luftpolster ausgebildet, welches im Bereich der Öffnung 45 steht und somit den Inneren Öl gefüllten Bereich vom Äußeren trennt. Um auch während eines Transports, bei dem das Ventil gegebenenfalls kurzzeitig gekippt wird, eine Trennung des äußeren Bereichs vom inneren Bereich 44 sicher zu stellen, kann zusätzlich ein Sieb an der Öffnung 45 eingebracht werden, welches dazu dient, ein Auslaufen des Öls aus dem Inneren des Ventils zu verhindern.

Zusätzlich offenbart die EP 1 628 313 A2 einen Elektromagneten, insbesondere für einen Startermotor, an dessen Abdeckung eine Lüftungsöffnung ausgebildet ist, die durch eine in einem Membrangehäuse angeordnete Membran verschlossen wird. Ein Ventil mit einem Ankerraum wird nicht offenbart.

Es ist daher Aufgabe der Erfindung, einen Aktor für Ventile in Verbrennungskraftmaschinen zu schaffen, welche sowohl eine Entlüftung als auch eine Belüftung des Aktors und insbesondere des Ankerraums bei Elektromagneten sicherstellt, wobei gleichzeitig ein sicherer Schutz vor einem Eindringen von Staubpartikeln oder Spritzwasser in das Innere des Aktors gewährleistet werden soll. Dabei sollen eine leichte und kostengünstige Herstellung und Montage sichergestellt werden.

Diese Aufgabe wird durch einen Aktor für Ventile in Verbrennungskraftmaschinen mit den Merkmalen des Hauptanspruchs gelöst.

Dadurch, dass die elektrische Antriebseinheit ein Elektromagnet ist, dessen Anker mit einer Ventilstange wirkverbunden ist, wobei die Lüftungsöffnung im Gehäuse durch eine feinporige Membran verschlossen ist, welche derart am Gehäuse in einen Ankerraum des Elektromagneten mündet, dass die durch Verschiebung des Ankers entstehenden Druckpulsationen im Innern des Elektromagnetventils abbaubar sind, kann Gas abhängig von der bestehenden Druckdifferenz entweder in den Innenraum gelangen oder nach außen entweichen. Andererseits wird ein Eindringen von Feststoffen oder Spritzwasser in das Innere des Aktors durch die Membran verhindert, da die Moleküle dieser Stoffe größer sind als die Poren der Membran. Des Weiteren wird eine schnelle und zuverlässige Betätigung des Ventils bei geringem Stromverbrauch sowie eine einfache Verbindung zwischen Aktor und Ventil sichergestellt. Der Abbau der durch Verschiebung des Ankers entstehenden Druckpulsationen im Innern des Elektromagnetventils erfolgt schnell und zuverlässig.

Vorzugsweise ist die Membran auf einer zum Innenraum gewandten Oberfläche des Gehäuses angeordnet, wodurch eine mögliche Beschädigung der Befestigungsfläche der Membran dadurch verhindert wird, dass keine äußere Kraftangriffsfläche vorhanden ist.

Als besonders vorteilhaft hat es sich herausgestellt, wenn die Membran eine PTFE-Membran ist, da die Porengröße einer derartigen Membran eine Be- und Entlüftung sicherstellt und das Eindringen von Wasser und Feststoffen verhindert. Des Weiteren ist diese Membran sehr langlebig.

In einer vorteilhaften Ausführungsform ist die Membran am Gehäuse verschweißt. Dieser Befestigungsprozess sorgt für eine hohe Stabilität der Befestigung bei geringen Kosten.

Bei einer hierzu alternativen Ausführung sind Ränder der Membran vom Kunststoff des Gehäuses umspritzt.

Vorzugsweise ist die Lüftungsöffnung am Gehäuse im Bereich des Steckers ausgebildet, der bei einer derartigen Anordnung als zusätzliche Abschirmung gegen Spritzwasser dient.

Besonders vorteilhaft ist es, wenn der Stecker einen Abschnitt aufweist, der sich im Wesentlichen parallel zu einer Oberfläche des Gehäuses erstreckt, wobei die Lüftungsöffnung im Gehäuse gegenüberliegend zum sich parallel erstreckenden Abschnitt des Steckers angeordnet ist. Bei dieser Ausführung dient der Stecker als Kappe oder Abschirmplatte, wodurch noch weniger Spritzwasser zur Lüftungsbohrung gelangen kann, ohne zusätzliche Bauteile verwenden zu müssen oder die Lüftungsfunktion einzuschränken.

Eine besonders einfache Herstellung des Aktors ergibt sich, wenn der Stecker sich von einem Deckelteil der elektrischen Antriebseinheit erstreckt, wobei das die Antriebseinheit umgebende Gehäuse an das Deckelteil angespritzt ist. So kann die Membran bei guter Zugänglichkeit zunächst an der zur Innenseite gewandten Seite des Deckels befestigt beziehungsweise verschweißt werden.

Somit wird ein Aktor für Ventile in Verbrennungskraftmaschinen geschaffen, mit dem sowohl eine Belüftung als auch eine Entlüftung des Gehäuses des Aktors sichergestellt wird und der eine hohe Unempfindlichkeit gegen Schmutz in flüssiger oder fester Form aufweist. Dieser Aktor ist einfach und kostengünstig herstellbar und montierbar und weist eine hohe Lebensdauer und sehr gute Funktionalität auf, indem Fehler durch Schmutz oder Druck vermieden werden.

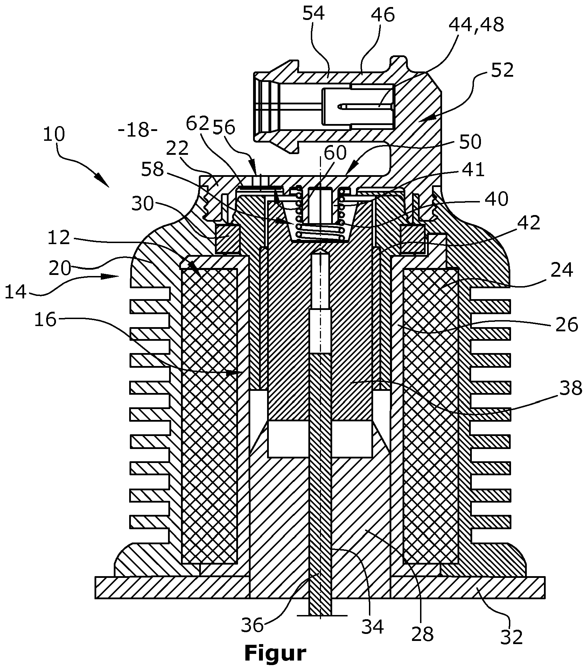

Ein Ausführungsbeispiel der Erfindung ist in den Zeichnungen dargestellt und wird nachfolgend beschrieben.
Die Figur zeigt eine Seitenansicht eines erfindungsgemäßen Aktors in geschnittener Darstellung.

Der in der Figur dargestellte Aktor 10 weist eine elektrische Antriebseinheit 12 auf, die von einem Gehäuse 14 umgeben ist, die einen Innenraum 16, in dem die Antriebseinheit 12 angeordnet ist, von einem Außenbereich 18 trennt. Das Gehäuse 14 weist einen die Antriebseinheit 12 im Wesentlichen radial umgebenden Gehäuseteil 20 sowie einen Deckelteil 22 auf, mittels dessen das Gehäuse 14 an einem ersten axialen Ende verschlossen wird.

Die elektrische Antriebseinheit 12 ist als Elektromagnet ausgeführt und besteht aus einer Spule 24, die auf einem Spulenträger 26 gewickelt ist, einem Kern 28, der im Spulenträger 26 befestigt ist, einem Joch 30 sowie einem am zum ersten axialen Ende gegenüberliegenden Ende des Gehäuses 14 angeordneten Rückschlussblech 32, welches dieses Ende weitestgehend verschließt und gleichzeitig als Flanschfläche zur Befestigung eines Strömungsgehäuses dienen kann. Das Rückschlussblech 32 umgibt einen axialen Endabschnitt des Kerns 28 und ist im Wesentlichen plattenförmig ausgebildet. Der Kern 28 weist eine zentrale Durchgangsöffnung 34 auf, durch die eine Ventilstange 36 eines zu betätigenden Ventils ragt, welche mit einem beweglichen Anker 38 verbunden ist, der durch Bestromen der Spule 24 in Richtung des Kerns 28 gezogen wird und mittels einer Feder 40 in Richtung des Kerns 28 belastet ist, die einen am Deckelteil 22 ausgebildeten Vorsprung 41 radial umgibt und durch diesen geführt wird. Eine weitere, nicht dargestellte Feder drückt den Anker 38 im nicht bestromten Zustand der Spule 24 vom Kern 28 weg in seine Ausgangsposition. Der Anker 38 wird in einer im Innern des Spulenträgers 26 befestigten Gleitbuchse 42 gelagert.

Zur Versorgung der Spule 24 mit Strom aber auch zur Kontaktierung gegebenenfalls integrierter Platinen, Stellungs- oder Drucksensoren sind im Gehäuse 14 Stanzgitter 44 eingelegt oder umspritzt, die in einen Stecker 46 münden, der am Deckelteil 22 ausgebildet ist. Aus diesem Stecker 46 ragen die Kontaktfahnen 48 des Stanzgitters 44, über welche der Aktor 10 mit einer Spannungsquelle oder/und einer Motorsteuereinheit über weiterführende Leitungen in bekannter Weise verbunden wird.

Der Stecker 46 erstreckt sich von einer Oberfläche 50 des Deckelteils 22 zunächst senkrecht weg und weist im weiteren Verlauf einen Knick 52 auf, von dem aus er sich wiederum senkrecht weiter erstreckt, so dass dieser Abschnitt 54 des Steckers 46 im Wesentlichen parallel zur Oberfläche 50 des Deckelteils 22 verläuft.

Am vom Abschnitt 54 des Steckers 46 überdeckten Bereich des Deckelteils 22 ist eine Lüftungsöffnung 56 ausgebildet, über die eine Verbindung zwischen dem Innenraum 16 und dem Außenbereich 18 des Gehäuses 14 hergestellt wird. In vorliegender Ausführung wird so ein Ankerraum 58 be- und entlüftet. An der zum Ankerraum 58 weisenden Oberfläche 60 ist eine feinporige Membran 62 verschweißt, die die Lüftungsbohrung vollständig überdeckt. Diese Membran 62 ist in vorliegendem Ausführungsbeispiel eine PTFE-Membran, durch deren Poren Gase nach außen oder innen dringen können, jedoch keine Flüssigkeiten oder Feststoffe, wie Rußpartikel in den Innenraum 16 gelangen können. Die Größe dieser Poren beträgt etwa 0,2 bis 1 µm.

Bei der Herstellung des Gehäuses 14 des Aktors 10 wird zunächst das Deckelteil 22 gespritzt und anschließend die Membran 62 an der Lüftungsöffnung 56 von innen verschweißt. Anschließend wird das radial die Antriebseinheit umgebende Gehäuseteil 20 an das Deckelteil 22 angespritzt. Entsprechend befindet sich die Verbindungsebene zwischen der Membran 62 und dem Deckelteil 22 im Bereich des Innenraums 16, so dass ein ungewolltes Lösen der Membran 62 durch Krafteinwirkung von außen weitestgehend ausgeschlossen werden kann.

Wird nun durch Bestromung der Anker 38 in Richtung des Kerns 28 gezogen, um ein angeschlossenes Ventil zu öffnen, könnte im Ankerraum 58 des Aktors 10 ein Unterdruck entstehen. Dies wird dadurch verhindert, dass Luft vom Außenbereich 18 über die Lüftungsöffnung 56 und die Membran 62 angesaugt werden kann. Ebenso kann bei umgekehrter Bewegung des Ankers 38 verhindert werden, dass im Ankerraum 58 ein Überdruck aufgebaut wird. Auch andere Druckdifferenzen, beispielsweise aufgrund von Druckpulsationen in den Leitungen oder einfach aufgrund von Temperaturwechseln, können ausgeglichen werden.

Wird dieser Aktor 10 in einem Fahrzeug verwendet, wird er üblicherweise Spritzwasser oder auch festen Verunreinigungen ausgesetzt sein. Einen großen Teil dieser Verunreinigungen und des Spritzwassers schirmt zunächst der die Lüftungsöffnung 56 überragende Stecker 46 ab, der als eine Art Spritzwasserkappe dient. Flüssigkeiten oder Feststoffe, die dennoch zur Lüftungsöffnung 56 gelangen, werden durch die Membran 62 davon abgehalten in den Innenraum 16 einzudringen, da deren Poren für diese Stoffe zu klein sind, als dass sie hindurch gelangen könnten.

Somit wird ein Aktor geschaffen, bei dem keine Einschränkung der Funktionsfähigkeit durch Druckunterschiede im Innenraum auftritt und der andererseits eine lange Lebensdauer aufweist, da der Innenraum gegen Verunreinigungen von außen abgeschirmt ist. Diese Funktionen werden erreicht, ohne dass größere Montage- oder Herstellkosten erforderlich sind. Auch wird eine lange Haltbarkeit der Membran sichergestellt.

Es sollte deutlich sein, dass verschiedene konstruktive Änderungen des Aktors denkbar sind, ohne den Schutzbereich des Hauptanspruchs zu verlassen. So kann die Membran, je nach verwendetem Kunststoff auch zur Befestigung bei der Herstellung des Deckels umspritzt werden. Auch können verschiedene elektrische Antriebe, wie Elektromotoren verwendet werden. Zusätzlich können vorteilhafte andere Stoffe als Membrane verwendet werden. Des Weiteren kann beispielsweise der Stecker gerade ausgebildet werden oder am radial begrenzenden Gehäuseteil ausgebildet werden.

## Patentansprüche

1. Ventil für Verbrennungskraftmaschinen mit
einem Aktor mit
einer elektrischen Antriebseinheit (12),
einem Gehäuse (14), in dessen Innenraum (16) die Antriebseinheit (12) angeordnet ist,
mindestens einer Lüftungsöffnung (56) im Gehäuse (14),
und einem Stecker (46), über den die Antriebseinheit (12) elektrisch mit einer Spannungsquelle verbindbar ist,
**dadurch gekennzeichnet, dass**
die elektrische Antriebseinheit (12) ein Elektromagnet ist, dessen Anker (38) mit einer Ventilstange (36) wirkverbunden ist, dass die Lüftungsöffnung (56) im Gehäuse (14) durch eine feinporige Membran (62) verschlossen ist, und, dass die Lüftungsöffnung am Gehäuse (14) in einen Ankerraum (58) des Elektromagneten mündet, so dass die durch Verschiebung des Ankers entstehenden Druckpulsationen im Innern des Elektromagnetventils abbaubar sind.

2. Ventil für Verbrennungskraftmaschinen nach Anspruch 1,
**dadurch gekennzeichnet, dass**
die Membran (62) auf einer zum Innenraum (16) gewandten Oberfläche (60) des Gehäuses (14) angeordnet ist.

3. Ventil für Verbrennungskraftmaschinen nach einem der Ansprüche 1 oder 2,
**dadurch gekennzeichnet, dass**
die Membran (62) eine PTFE-Membran ist.

4. Ventil für Verbrennungskraftmaschinen nach einem der vorhergehenden Ansprüche,
**dadurch gekennzeichnet, dass**
die Membran (62) am Gehäuse (14) verschweißt ist.

5. Ventil für Verbrennungskraftmaschinen nach einem der Ansprüche 1 bis 3,
**dadurch gekennzeichnet, dass**
Ränder der Membran (62) vom Kunststoff des Gehäuses (14) umspritzt sind.

6. Ventil für Verbrennungskraftmaschinen nach einem der vorhergehenden Ansprüche,
**dadurch gekennzeichnet, dass**
die Lüftungsöffnung (56) am Gehäuse (14) im Bereich des Steckers (46) ausgebildet ist.

7. Ventil für Verbrennungskraftmaschinen nach einem der vorhergehenden Ansprüche,
**dadurch gekennzeichnet, dass**
der Stecker (46) einen Abschnitt (54) aufweist, der sich im Wesentlichen parallel zu einer Oberfläche (50) des Gehäuses (14) erstreckt, wobei die Lüftungsöffnung (56) im Gehäuse (14) gegenüberliegend zum sich parallel erstreckenden Abschnitt (54) des Steckers (46) angeordnet ist.

8. Ventil für Verbrennungskraftmaschinen nach einem der vorhergehenden Ansprüche,
**dadurch gekennzeichnet, dass**
der Stecker (46) sich von einem Deckelteil (22) des Gehäuses (14) des Aktors (10) erstreckt, wobei das die Antriebseinheit (12) radial umgebende Gehäuse (14) an das Deckelteil (22) angespritzt ist.

## Claims

1. A valve for internal combustion engines comprising
an actuator with an electric drive unit (12),
a housing (14) in the interior (16) of which said drive unit (12) is arranged,
at least one aeration opening (56) in said housing (14),
and a plug (46) via which said drive unit (12) is adapted to be electrically connected with a voltage source,
**characterized in that**
the electric drive unit (12) is an electromagnet whose armature (38) is operatively connected with a valve rod (36), that said aeration opening (56) in said housing (14) is closed by a fine-pored membrane (62), and that the aeration opening (56) at the housing (14) leads into an armature space (58) of the electromagnet, such that pressure pulsations produced by displacement of the armature in the interior of the electromagnet can be dissipated.

2. The valve for internal combustion engines according to claim 1,
**characterized in that**
the membrane (62) is arranged at a surface (60) of the housing (14) facing the interior (16).

3. The valve for internal combustion engines according to any one of claims 1 or 2,
**characterized in that**
the membrane (62) is a PTFE membrane.

4. The valve for internal combustion engines according to any one of the preceding claims,
**characterized in that**
the membrane (62) is welded to the housing (14).

5. The valve for internal combustion engines according to any one of claims 1 to 3,
**characterized in that**
edges of the membrane (62) are enmolded by the plastic material of the housing (14).

6. The valve for internal combustion engines according to any one of the preceding claims,
**characterized in that**
the aeration opening (56) at the housing (14) is defined in the area of the plug (46).

7. The valve for internal combustion engines according to any one of the preceding claims,
**characterized in that**
the plug (46) comprises a portion (54) which extends essentially in parallel to a surface (50) of the housing (14), wherein the aeration opening (56) in said housing (14) is arranged opposite to said portion (54) of said plug (46) extending in parallel.

8. The valve for internal combustion engines according to any one of the preceding claims,
**characterized in that**
the plug (46) extends from a cover portion (22) of the housing (14) of the actuator (10), wherein said housing (14) radially surrounding the drive unit (22) is injection-molded to said cover portion (22).

## Revendications

1. Soupape de moteurs à combustion interne avec
un actionneur avec une unité d'entraînement (12) électrique,
un carter (14), dans l'intérieur duquel ladite unité d'entrainement (12) est disposée,
au moins une ouverture de ventilation (56) dans ledit carter (14),
et un connecteur (46) par lequel ladite unité d'entrainement (12) peut être reliée électriquement à une source de tension,
**caractérisée en ce que**
ladite unité d'entrainement (12) électrique est un électroaimant, dont l'armature (38) est en liaison fonctionnelle avec une tige de soupape (36), que ladite ouverture de ventilation (56) dans le carter (14) est fermée par une membrane (62) à pores fins, et que ladite ouverture de ventilation (56) s'ouvre au carter (14) dans une chambre d'armature (58) dudit électroaimant, de sorte que les pulsations de pression produites par le déplacement de l'armature dans l'intérieur de la soupape électromagnétique peuvent être éliminées.

2. Soupape de moteurs à combustion interne selon la revendication 1, **caractérisée en ce que** la membrane (62) est disposée sur une surface (60) du carter (14) dirigée vers l'intérieur (16).

3. Soupape de moteurs à combustion interne selon l'une des revendications 1 ou 2, **caractérisée en ce que** la membrane (62) est une membrane en PTFE.

4. Soupape de moteurs à combustion interne selon l'une quelconque des revendications précédentes, **caractérisée en ce que** la membrane (62) est soudée au carter (14).

5. Soupape de moteurs à combustion interne selon l'une quelconque des revendications 1 à 3, **caractérisée en ce que** des bords de la membrane (62) sont surmoulés par la matière plastique du carter (14).

6. Soupape de moteurs à combustion interne selon l'une quelconque des revendications précédentes, **caractérisée en ce que** ladite ouverture de ventilation (56) est formée dans le carter (14) dans la région du connecteur (46).

7. Soupape de moteurs à combustion interne selon l'une quelconque des revendications précédentes, **caractérisée en ce que** le connecteur (46) présent une section (54) qui s'étend essentiellement en parallèle à une surface du carter (14), ladite ouverture de ventilation (56) dans le carter (14) étant disposée opposée à la section (54) du connecteur (46) parallèle.

8. Soupape de moteurs à combustion interne selon l'une quelconque des revendications précédentes, **caractérisée en ce que** le connecteur (46) s'étend d'un élément de couvercle (22) du carter (14) de l'actionneur (10), ledit carter (14) radialement entourant ladite unité d'entrainement (12) étant moule par injection sur l'élément de couvercle (22).
